Europäisches Patentamt

European Patent Office

Office européen des brevets

(11) Veröffentlichungsnummer: **0 616 974 A1**

## (12) EUROPÄISCHE PATENTANMELDUNG

(21) Anmeldenummer: **94103239.3**

(51) Int. Cl.5: **C01B 33/20**, C09C 1/00

(22) Anmeldetag: **04.03.94**

(30) Priorität: **26.03.93 DE 4309975**

(43) Veröffentlichungstag der Anmeldung:
**28.09.94 Patentblatt 94/39**

(84) Benannte Vertragsstaaten:
**DE ES FR GB IT NL**

(71) Anmelder: **CERDEC AKTIENGESELLSCHAFT KERAMISCHE FARBEN**
**Gutleutstrasse 215**
**D-60327 Frankfurt (DE)**

(72) Erfinder: **Speer, Dietrich, Dr.**
**Grünaustrasse 5**
**D-63457 Hanau (DE)**
Erfinder: **Zell, Christel**
**Bulaustrasse 11**
**D-63517 Rodenbach (DE)**
Erfinder: **Wilfert, Jenny**
**Feldstrasse 20**
**D-63456 Hanau (DE)**
Erfinder: **Kiss, Akos, Dr.**
**Fürstenbergstrasse 10**
**D-63457 Hanau (DE)**

(54) **Violette Zirkon-Vanadium-Pigmente.**

(57) Die Erfindung richtet sich auf violette Zirkon-Vanadium-Pigmente, welche im Zirkon-Wirtsgitter mit Vanadium und Phosphor dotiert sind und gegenüber vorbekannten galtungsgemäßen Pigmenten eine stärkere Rotverschiebung und höhere Farbintensität aufweisen.

Die erfindungsgemäßen Pigmente weisen im CIE-Lab-Farbsystem L*-Werte von gleich oder kleiner 58, $a_*$-Werte von gleich oder größer +9 und $b_*$-Werte von kleiner -10 auf.

Zur Herstellung wird ein Pulvergemisch, das frei ist von thermisch gespaltenem Zirkoniumsilikat und aus im wesentlichen $ZrO_2$, $SiO_2$, einer Vanadium- und einer Phosphorverbindung sowie einer Fluorid-Chlorid-Mineralisatorkombination -Atomverhältnis Zr:Si:V:P = 1 : (0,95-1,1) : (0,05-0,20) : (0,008-0,028) - besteht, bei 700 - 900 °C geglüht.

Die Erfindung richtet sich auf violette Zirkon-Vanadium-Pigmente, deren Zirkon-Wirtsgitter außer mit Vanadium mit Phosphor dotiert ist. Erfindungsgemäße Pigmente zeichnen sich gegenüber gattungsgemäßen vorbekannten Pigmenten durch deutlich verbesserte Farbwerte im CIE-L*a*b*-Farbsystem aus. Ein weiterer Gegenstand der Erfindung betrifft ein Verfahren zur Herstellung der violetten Zirkon-Vanadium-Pigmente.

Glasurstabile Farbpigmente auf der Basis von mit Vanadium dotiertem Zirkoniumsilikat sind lange bekannt - US-PS 2,441,447. Derartige Farbkörper, häufig als Zirkon-Vanadin-Blau bezeichnet, werden durch Glühen eines Gemischs aus Zirkonium-, Silicium- und Vanadiumverbindungen, welche zur Bildung von $ZrO_2$, $SiO_2$ bzw. $V_2O_5$ befähigt sind, hergestellt; das bei 650 bis 1200 °C zu glühende Pulvergemisch enthält in der Regel einen oder mehrere Mineralisatoren aus der Reihe der Alkalimetalloxide, Hydroxide, Carbonate, Chloride und Fluoride. Die Farbwerte derartiger Pigmente, gemessen im CIE-L*a*b*-Farbsystem nach DIN 5033 (Teil 3, 01/80) anhand einer 5 gew.-%igen Einfärbung in einer Transparentglasur, liegen bei unter günstigsten Bedingungen hergestellten Pigmenten im Bereich von $L^* = 37$ bis $45$, $a^* = -5$ bis $-12$ und $b^* = -25$ bis $-35$. Auch wenn in der Literatur nur von Zirkon-Vanadin-Blau die Rede ist, darf nicht übersehen werden, daß es sich hier um einen türkisblauen Farbkörper, also einen solchen mit relativ großem Grünanteil - gekennzeichnet durch den stark negativen a*-Wert - handelt.

Aus der GB-PS 1 447 276 sind grünlich-blaue bis blau-violette oder grau-violette Farbkörper auf der Basis von mit Vanadium dotiertem Zirkoniumsilikat bekannt. Die Farbverschiebung von dem bekannten grünlich-blau zu einem mehr rötlichen Ton wird in dem in diesem Dokument beschriebenen Verfahren dadurch erzielt, daß das zu glühende Gemisch zusätzlich eine kleine Menge eines anorganischen Phosphats oder eines organischen Phorphorsäureesters enthält; als Quelle für $ZrO_2$ und $SiO_2$ wird hier ausschließlich thermisch dissoziiertes Zirkoniumsilikat verwendet. Es wurde von der Anmelderin der vorliegenden Erfindung bei der Nacharbeitung festgestellt, daß die nach diesem Verfahren erhaltenen leicht rötlich getönten Blau-Farbkörper im Zirkoniumsiliat-Wirtsgitter außer Vanadium auch Phosphor enthalten. Die gemäß der GB-PS 1 447 276 hergestellten, als blau bis blau-violett bezeichneten phosphorhaltigen Zirkon-Vanadium-Pigmente sind gekennzeichnet durch eine geringe Farbintensität - L*-Wert im allgemeinen über 65 - und eine ungenügende Rotverschiebung.

Ein weiterer Nachteil der nach dem Verfahren der GB-PS 1 447 276 hergestellten phosphorhaltigen Pigmente besteht darin, daß sich diese nicht in reproduzierbarer Qualität, d. h. mit geringen Farbabständen, gemessen nach der CIELAB-Formel gemäß DIN 6174 (01/1979), herstellen lassen. Mit thermisch dissoziiertem Zirkoniumsilikat gelangt man nicht nur zu wenig farbintensiven Pigmenten, sondern zusätzlich variiert in nicht vorhersehbarer Weise der a*-Wert zwischen etwa -10 und +5. Dieser Nachteil überrascht zunächst, weil von thermisch dissoziiertem Zirkoniumsilikat besonders günstige Voraussetzungen für die Bildung von Wirtsgitterpigmenten erwartet wurden, da hier ein besonders inniges Gemisch der beiden Komponenten $SiO_2$ und $ZrO_2$ vorliegt. Eine der Ursachen für diesen Nachteil wird in dem gegebenenfalls wechselnden Gehalt an undissoziiertem Zirkoniumsilikat im thermisch dissoziierten Zirkoniumsilikat vermutet: Durch thermisch undissoziiertes Zirkoniumsilikat wird offensichtlich die Neubildung von $ZrSiO_4$ aus $SiO_2$ und $ZrO_2$ angeimpft, so daß die erforderliche Dotierung mit Vanadium und Phosphor ungenügend bleibt, wodurch es zu einer Minderung der Farbintensität kommt.

Die noch nicht veröffentlichte DE-Patentanmeldung P 42 16 174.6-41 betrifft neutralblaue Zirkon-Vanadium-Pigmente, deren Wirtsgitter außer mit Vanadium auch mit Phosphor dotiert ist; diese Pigmente führen in 5 gew.-%iger Einfärbung in einer Transparentglasur zu CIE-L*a*b*-Farbwerten (DIN 5033, Teil 3) von $L^* = 35$ bis $50$, $a^* = 0$ bis $+4$ und $b^* = -25$ bis $-35$. Derartige Pigmente lassen sich durch Glühen eines Pulvergemischs aus $ZrO_2$, $SiO_2$, wobei $ZrO_2$ und $SiO_2$ nicht in Form thermisch dissoziierten Zirkoniumsilikats vorliegen, einer Vanadium- und einer Phosphorverbindung in Gegenwart eines Fluoridmineralisators herstellen. Entgegen der Lehre in diesem Dokument, das die fakultative Mitverwendung eines Chloridmineralisators nicht ausschließt, wurde nun überraschenderweise gefunden, daß man durch Verwendung einer Fluorid-Chlorid-Mineralisatorkombination bei geeignetem Zr/V- und Zr/P-Atomverhältnis nicht zu neutralblauen, sondern zu violetten Pigmenten gelangt.

Aufgabe der vorliegenden Erfindung war somit, violette Zirkon-Vanadium-Pigmente zur Verfügung zu stellen, welche gegenüber vorbekannten gattungsgemäßen Pigmenten sowohl eine stärkere Rotverschiebung (a* gleich/größer +9) als auch eine höhere Farbintensität (L* gleich/kleiner 58) aufweisen. Ein weiteres Ziel der Erfindung richtet sich auf die Herstellung der violetten Pigmente: Das Verfahren sollte sicher reproduzierbar sein, d. h. der nach der CIELAB-Formel (DIN 6174) ermittelte Farbabstand sollte im Bereich handelsüblicher Toleranzen liegen ($\Delta E^*_{ab} = 0\text{-}3$).

Gefunden wurden violette Zirkon-Vanadium-Pigmente, deren Zirkon-Wirtsgitter außer mit Vanadium mit Phosphor dotiert ist, welche dadurch gekennzeichnet sind, daß sie in 5 gew.-%iger Einfärbung in einer Transparentglasur die Farbwerte (CIE-Lab-Farbsystem nach DIN 5033, Teil 3) L* gleich oder kleiner 58, a* gleich oder größer +9 und b* kleiner -10 aufweisen.

Die erfindungsgemäßen violetten Pigmente sind durch das erfindungsgemäße Verfahren erhältlich. Sowohl Phosphor als auch Vanadium sind im Zirkon-Wirtsgitter eingebaut. Wesentlich für die Farbwerte scheint ein bestimmter, eng begrenzter Gehalt von Vanadium und Phosphor im Wirtsgitter zu sein; der Vanadiumgehalt liegt im Bereich von etwa 0,3 bis 0,6 Gew.-%, der Phosphorgehalt im Bereich von etwa 0,15 bis 0,45. Bevorzugte violette Pigmente enthalten im Zirkon-Wirtsgitter 0,2 bis 0,4 Gew.-% Phosphor und 0,4 bis 0,5 Gew.-% Vanadium und führen in 5 gew.-%iger Einfärbung in einer Transparentglasur zu einem L*-Wert (Intensität) von gleich oder kleiner 53, insbesondere 40 bis 53, einem a*-Wert (Rotwert) von +10 bis +15 meist 11 bis 13 und einem b*-Wert (Blauwert) von -15 bis -25, insbesondere -15 bis -20. Im einige 100 kg-Maßstab hergestellte violette erfindungsgemäße Pigmente führten in 10 %iger Einfärbung zu L-Werten von 38 bis 42, a-Werten von etwa +11 bis +13 und b-Werten von etwa -25 bis -30.

Die erfindungsgemäßen violetten Pigmente lassen sich dadurch herstellen, daß ein Pulvergemisch, das frei ist von thermisch gespaltenem Zirkoniumsilikat und im wesentlichen aus pulverförmigem Zirkoniumdioxid, einer Quelle für Siliziumdioxid aus der Reihe natürlicher oder synthetischer Kieselsäuren und Zeolithe, mindestens einer Vanadiumverbindung aus der Reihe der Vanadiumoxide und Vanadate, mindestens einer während des Verfahrens in ein Phosphat überführbaren anorganischen oder organischen Phosphorverbindung und mindestens einem Fluorid- und mindestens einem Chlorid-Mineralisator besteht, wobei im Pulvergemisch das Atomverhältnis Zirkonium zu Silizium zu Vanadium zu Phosphor im Bereich von 1 zu (0,95-1,10) zu (0,05-0,20) zu (0,008-0,028) beträgt und die Mineralisatoren in einer Menge von 1 bis 15 Gew.-%, bezogen auf das Pulvergemisch, bei einem Fluorid- zu Chlorid-Atomverhältnis im Bereich von 4 zu 1 bis 1 zu 2 anwesend sind, mittels einer Mahlung in einer Intensivmühle homogenisiert und dann 1 bis 5 Stunden bei 700 °C bis 900 °C geglüht wird.

Erfindungswesentliches Merkmal ist die Verwendung eines Mineralisatorgemischs, das als wesentliche Komponenten mindestens ein Fluorid und ein Chlorid enthält. Vorzugsweise sind Fluorid und Chlorid im Atomverhältnis 3 zu 1 bis 1 zu 1 im Pulvergemisch anwesend. Die Mineralisatormenge beeinflußt die Feststoffreaktion zwischen den Reaktionspartnern; Bei einer Mineralisatormenge um 1 bis 4 Gew.-% ist eine lange Glühdauer erforderlich, um einen ausreichenden Umsatz zu erzielen; eine hohe Mineralisatormenge von 8 bis 15 Gew.-% ist zwar möglich, bringt gegenüber der bevorzugten Menge von etwa 4 bis 8 Gew.-% im allgemeinen aber keine weiteren Vorteile. Der Fluoridmineralisator kann in Form eines oder mehrerer Alkalifluoride, eines Alkalisilicofluorids sowie in eingeschränktem Umfang als Magnesium- oder Calciumfluorid in das Pulvergemisch eingebracht werden. Alkalifluoride und insbesondere Natriumfluorid werden bevorzugt. Der Chloridmineralisator wird üblicherweise in Form eines oder mehrerer Alkalichloride oder in eingeschränktem Umfang Magnesium- oder Calciumchlorids eingesetzt.

Das zu glühende Gemisch enthält pulverförmiges Zirkoniumdioxid und eine Quelle für Siliciumdioxid, üblicherweise ein Siliciumdioxid natürlicher oder synthetischer Provenienz, in etwa stöchiometrischem Verhältnis; besonders bevorzugt wird ein $ZrO_2$/$SiO_2$-Verhältnis von 1 zu 0,97 bis 1,03, insbesondere 1 zu 1. $ZrO_2$ und $SiO_2$ werden nicht als thermisch dissoziiertes Zirkoniumsilikat eingesetzt. Bei Verwendung von Quarzpulver oder synthetisch hergestellter Kieselsäure, wie gefällte Kieselsäure oder dealuminierter Zeolith, als $SiO_2$-Quelle weist das zu verwendende Zirkoniumdioxid zweckmäßigerweise einen mittleren Teilchendurchmesser ($d_{50}$-Wert) im Bereich von 2 bis 9 $\mu$m, vorzugsweise 2 bis 5 $\mu$m, auf.

Zum Zwecke der Dotierung des sich bildenden Zirkon-Wirtsgitters mit Phosphor können unterschiedliche Phosphorverbindungen in das Pulvergemisch eingebracht werden: Im Prinzip sind alle Phosphorverbindungen geeignet, welche während des Aufheizens und/oder der Glühung des Pulvergemischs zu einem Phosphat reagieren können. Unter den anorganischen Phosphorverbindungen sind die Phosphor-Sauerstoff-Säuren sowie deren Salze hervorzuheben, beispielsweise Phosphorsäure, Pyrophosphorsäure, Polyphosphorsäure sowie Alkali- und Ammoniumsalze dieser Säuren. Auch organische Phosphorverbindungen, welche mindestens eine P-O-Bindung aufweisen, beispielsweise Phosphorsäureester und Phosphonsäuren sowie deren Salze, sind geeignet. Die in fester oder flüssiger Form vorliegenden Phosphorverbindungen können als solche dem Pulvergemisch zugegeben werden. Zum Zwecke einer guten Verteilung ist es vorteilhaft, die Phosphorverbindung in flüssiger Form, worunter auch wäßrige Lösungen zu verstehen sind, auf das Gemisch aus $ZrO_2$, $SiO_2$-Quelle und Vanadiumverbindung aufzusprühen.

Besonders bevorzugte Phosphorverbindungen sind Alkaliphosphate, wie insbesondere Natriumphosphat, das pulverförmig oder als wäßrige Lösung in das Pulvergemisch eingebracht wird. Der mit der Phosphorverbindung eingebrachte Phosphor wird im wesentlichen vollständig in das Wirtsgitter eingebaut. Ein Atomverhältnis von Zr zu P im Pulvergemisch von 1 zu größer 0,028 ist im Prinzip möglich, jedoch sind dabei erhältliche Pigmente wenig farbintensiv (L*-Werte um/über 70); ein Atomverhältnis Zr zu P von 1 zu kleiner 0,008 sind blau mit gegebenenfalls leichtem Rotton, aber nicht violett, da der a* -Wert um/unter 5 liegt. Zur Herstellung bevorzugter violetter Pigmente hat sich ein Atomverhältnis Zr zu P im Bereich von 1 zu (etwa 0,015 bis 0,025) als vorteilhaft erwiesen.

Als Vanadiumverbindung können Vanadiumoxide, insbesondere $V_2O_5$ und Vanadate, insbesondere Alkali- und Ammoniumvanadate, eingesetzt werden. Das Einsatzatomverhältnis Zr zu V kann zwar im Bereich von 1 zu (0,05 bis 0,20) liegen, bevorzugt wird aber ein Bereich von 1 zu (0,1 bis 0,15). Es wird nur ein kleiner Teil des anwesenden Anteils Vanadium in das Wirtsgitter eingebaut. In Anwesenheit der erfindungsgemäßen Mineralisatorkombination nimmt mit zunehmender Menge anwesender Phosphorverbindung die in das Wirtsgitter eingebaute Menge Vanadium deutlich ab. Bei Verwendung nur eines Mineralisators auf Fluoridbasis anstelle der erfindungsgemäßen Fluorid-Chlorid-Kombination ist bei gleicher Phosphor- und Vanadiummenge im Pulvergemisch der Vanadiumgehalt im Wirtsgitter doppelt so hoch, die Farbe jedoch im wesentlichen blau und nicht violett.

Der Hinweis, wonach das Pulvergemisch "im wesentlichen" aus den vorstehend erörterten Komponenten besteht, ist so zu verstehen, daß außer dem oben erwähnten Wasser und rohstoffbedingten Verunreinigungen zusätzlich andere Verarbeitungshilfsmittel, wie z. B. Silikonöle als Mahlhilfsmittel, in kleiner Menge, im allgemeinen unter 5 Gew.-%, vorzugsweise unter 2 Gew.-%, bezogen auf das Pulvergemisch, zugegen sein können.

Ein erfindungswesentliches Merkmal im Rahmen der Herstellung der violetten Zirkon-Vanadium-Pigmente besteht darin, daß das Pulvergemisch vor der Glühung intensiv gemahlen wird. Während des Mahlprozesses werden hohe Scherkräfte wirksam, wodurch sowohl eine gute Homogenisierung als auch eine mechanische Aktivierung - Hervorrufung von Kristallbaufehlern durch Reibung, Schlag, Druck und Scherung - bewirkt wird. Geeignete Intensivmühlen sind beispielsweise Kugelmühlen, hochtourige Schlagmühlen und Schwingmühlen. Die Mahldauer richtet sich im wesentlichen nach dem verwendeten Mühlenaggregat, der Betriebsintensität desselben sowie nach dem Füllgrad.

Der Fachmann wird die optimale Mahldauer durch orientierende Vorversuche ermitteln. Im Falle der Mahlung in einer Kugelmühle oder Schwingmühle werden bei einer Mahldauer im Bereich zwischen 30 und 60 Minuten gute Ergebnisse erzielt.

Das homogenisierte und mechanisch aktivierte Pulvergemisch wird bei einer Glühtemperatur im Bereich von 700 bis 900 °C, vorzugsweise 750 bis 850 °C, geglüht; die Glühdauer liegt im Bereich zwischen 1 und 5, vorzugsweise zwischen 2 und 5 Stunden. Die Glühung wird in für die genannten Temperaturen geeigneten üblichen Glühöfen, beispielsweise Elektrokammeröfen oder Tunnelöfen, durchgeführt. Das Pulvergemisch befindet sich bei der Glühung üblicherweise in Schamotte-Tiegeln; sofern erwünscht, kann das Pulvergemisch auch in kompaktierter Form der Glühung zugeführt werden.

Es war überraschend, daß durch die Verwendung zirkonfreier $ZrO_2$ - und $SiO_2$-Rohstoffe anstelle eines thermisch dissoziierten Zirkoniumsilikats in Verbindung mit der für die Dotierung erforderlichen Vanadium- und Phosphorverbindung in Gegenwart der Fluorid-Chlorid-Mineralisatorkombination violette Pigmente mit höherer Farbintensität und farbwirksamen a*- und b*-Werten in sicher reproduzierbarer Form hergestellt werden können. Der Erfolg ist auch deshalb überraschend, weil in der Publikation Nr. 59, 2/83 der Firma Th. Goldschmidt auf Seite 13 die Lehre vermittelt wird, wonach Phosphate in einem Pulvergemisch, enthaltend $ZrO_2$, $SiO_2$, $V_2O_5$ und einen Mineralisator, den Einbau des Vanadiums verhindern und nur braune Farbkörper entstehen lassen. Demgegenüber ist es bei Einhaltung der anspruchsgemäß eng begrenzten Atomverhältnisse Zr zu V und Zr zu P und Verwendung einer Fluorid-Chlorid-Mineralisatorkombination möglich, die erfindungsgemäßen violetten Pigmente zu erhalten.

Ein wesentlicher Vorteil des erfindungsgemäßen Verfahrens besteht in einer sicheren Reproduzierbarkeit: die Farbabstände (DIN 6174) aufeinanderfolgender Produktionschargen liegen unter $\Delta E^*_{ab}$ = 3, meist unter 2. Die nach dem Verfahren zugänglichen violetten Pigmente weisen die gewünschte höhere Farbintensität und einen vollen violetten Farbton auf. Durch die Verfügbarkeit eines violetten Zirkon-Vanadium-Pigments bedarf es nicht mehr der Abmischung eines roten und blauen Pigments; damit bedarf es auch keiner Verwendung gegebenenfalls toxikologisch bedenklicher roter Pigmente, welche üblicherweise Cadmiumsulfoselenid als Farbkörper enthalten.

Anhand der nachfolgenden Beispiele und Vergleichsbeispiele wird die Erfindung weiter verdeutlicht.

## Vergleichsbeispiele 1 bis 4 (VB1 - VB4)

Farbkörper unter Verwendung von thermisch dissoziiertem Zirkoniumsilikat (TZS), hergestellt durch induktives Schmelzen von Zirkonsand und Abschrecken der Schmelze gemäß dem Verfahren der DE-Patentanmeldung P 41 06 536.0.

Die Zusammensetzung der zu glühenden Pulvergemische ist Tabelle 1 zu entnehmen, desgleichen der jeweilige $d_{50}$-Wert des TZS.

4

Das Pulvergemisch wurde 30 Minuten in einer Kugelmühle (Füllgrad 60 %, Kugelzahl 4 ⌀ = 3 cm) behandelt und anschließend in abgedeckten Schamotte-Tiegeln geglüht - Aufheizrate 70 K/h, Glühtemperatur 800 °C, Haltezeit 2 Stunden. Das geglühte Produkt wurde in bekannter Weise in einer Kugelmühle naß aufgemahlen, wobei gleichzeitig wasserlösliche Bestandteile herausgelöst wurden.

Die L*a*b*-Werte des gemahlenen und getrockneten Pigments wurden in 10 gew.-%iger Einfärbung in einer Transparentglasur bestimmt. Zusammensetzung der Transparentglasur in Gew.-%: 50,64 % $SiO_2$, 9,96 % $B_2O_3$ , 15,65 % PbO, 11,22 % $Al_2O_3$, 0,98 % $Na_2O$, 3,17 % $K_2O$, 8,05 % CaO, 0,14 % MgO, 0,05 % ZnO und 0,14 % $Fe_2O_3$. Die eingefärbte Testglasur wurde auf eine Testplatte aus Biskuitporzellan aufgetragen und bei 1060 °C 45 Min. eingebrannt. Die L*a*b*-Werte, gemessen nach DIN 5033, Teil 3 sind der Tabelle zu entnehmen.

Violette Pigmente wurden unter Verwendung von TZS nicht erhalten.

**Tabelle 1: Vergleichsbeispiele 1 bis 4**

Dotierung von thermisch dissoziiertem Zirkoniumsilikat (TZS) mit V und P

| | VB 1 | VB 2 | VB 3 | VB 4 |
|---|---|---|---|---|
| **Pulvergemisch** | | | | |
| TZS: $d_{50}$-Wert (g) | 50 µm 87,5 | 7,8 µm 87,5 | 6,4 µm 87,5 | 3,9 µm 87,5 |
| NaF (g) | 3,0 | 3,0 | 3,0 | 3,0 |
| NaCl (g) | 3,0 | 3,0 | 3,0 | 3,0 |
| $V_2O_5$ (g) | 4,5 | 4,5 | 4,5 | 4,5 |
| $Na_3PO_4$ (g) | 2,0 | 2,0 | 2,0 | 2,0 |
| **CIELAB-Farbwerte** 10 gew.-%ige Einfärbung in einer Transparentglasur | | | | |
| $L^*$ | 71,95 | 63,77 | 52,02 | 52,44 |
| $a^*$ | + 0,24 | + 3,38 | – 9,91 | – 9,99 |
| $b^*$ | – 0,27 | – 11,35 | – 24,75 | – 24,23 |
| Anmerkung: | kaum Farbbildung | neutralblau | blaugrün | blaugrün |

## Vergleichsbeispiele 5 bis 7

Farbkörper unter Verwendung von Zirkoniumdioxid und Siliziumdioxid. Die Zusammensetzung der Pulvergemische ist der Tabelle 2 zu entnehmen. Tabelle 2 enthält ferner Angaben über den P- und V-Gehalt im Pigment sowie die L*a*b*-Werte einer 5 %igen Einfärbung in einer Transparentglasur (Zusammensetzung wie bei VB 1 bis VB 4).

Mahlen des Pulvergemischs: 30 Minuten in einer Bloch-Rosetti-Mühle. Glühen des Pulvergemischs in abgedeckten Schamottetiegeln; Aufheizen 100 K/h, Haltezeit 2 h bei 780 °C. Aufmahlen des Glühguts mit Wasser. Einfärbung und Brennen der Glasur wie bei VB 1 bis VB 4 angegeben.

VB 5 zeigt, daß die alleinige Verwendung von NaF als Mineralisator nicht zu erfindungsgemäßen violetten Pigmenten führt (vergleiche VB 5 mit Beispiel 1).

Aus VB 6 und VB 7 folgt, daß ein Phosphorgehalt unterhalb und oberhalb der anspruchsgemäßen Grenzen bei Verwendung eines NaF/NaCl-Mineralisatorgemischs nicht zu erfindungsgemäßen Pigmenten führt.

**Tabelle 2: Vergleichsversuche 4 bis 6**

| | VB 5 | VB 6 | VB 7 |
|---|---|---|---|
| **Pulvergemisch** | | | |
| ZrO$_2$ (Typ: CC10) (g) | 60,6 | 58,5 | 58,5 |
| SiO$_2$ (Quarzmehl) (g) | 30,15 | 29,0 | 29,0 |
| V$_2$O$_5$ (g) | 5,0 | 5,0 | 5,0 |
| Na$_3$PO$_4$ (g) | 1,3 | 1,0 | 2,8 |
| NaF (g) | 3,1 | 3,0 | 3,0 |
| NaCl (g) | – | 3,0 | 3,0 |
| **Pigment** | | | |
| V (Gew.-%) | 0,85 | 0,78 | 0,31 |
| P (Gew.-%) | 0,22 | 0,19 | 0,39 |
| **CIELAB-Farbwerte einer 5 %igen Einfärbung in einer Transparentglasur** | | | |
| L* | 44,42 | 43,63 | 61,03 |
| a* | + 5,2 | + 3,16 | + 13,49 |
| b* | – 29,68 | – 30,1 | – 5,94 |
| Anmerkung: | rotstichiges Blau | neutralblau | blasses rotviolett |

**Beispiele 1 bis 5**

Die Zusammensetzung der Pulvergemische folgt aus Tabelle 3. Gemahlen und geglüht sowie aufgemahlen und ausgewaschen wurde bei den Beispielen 1 bis 4 wie im Falle der Vergleichsbespiele 5 bis 7. Die Mahl- und Glühbedingungen des Beispiels 5 entsprechen jenen der Vergleichsbeispiele 1 bis 4. Die L*a*b*-Werte wurden in üblicher Weise in einer 5 bzw. 10 %igen Einfärbung in einer Transparentglasur getestet (siehe Vergleichsbeispiele 1 bis 4).

Tabelle 3 enthält Angaben über den P- und V-Gehalt der Pigmente sowie die L*a*b*-Werte. Aus den Beispielen folgt, daß farbintensive violette Pigmente erhalten wurden; bevorzugte Pigmente (Beispiele 2 und 3 sowie 5) weisen ein ausgewogenes Verhältnis für den Rot- und Blauwert auf.

Die Beispiele 5i und 5ii zeigen, daß sich die Pigmente reproduzierbar, d. h. mit geringem Farbabstand (DIN 6174), selbst dann herstellen lassen, wenn unterschiedliche $ZrO_2$-Lieferchargen zum Einsatz gelangen.

**T a b e l l e 3 :** Erfindungsgemäße Beispiele 1 bis 5

| | 1 | 2 | 3 | 4 | 5 | |
|---|---|---|---|---|---|---|
| **Pulvergemisch** | | | | | | |
| $ZrO_2$ (Typ: CC10) (g) | 58,5 | 58,5 | 58,5 | 58,5 | 58,5 | |
| $SiO_2$ (Quarzmehl) (g) | 29,0 | 29,0 | 29,0 | 29,0 | 29,0 | |
| $V_2O_5$ (g) | 5,0 | 5,0 | 5,0 | 5,0 | 4,5 | |
| $Na_3PO_4$ (g) | 1,3 | 1,6 | 1,9 | 2,2 | 2,0 | |
| NaF (g) | 3,0 | 3,0 | 3,0 | 3,0 | 3,0 | |
| NaCl (g) | 3,0 | 3,0 | 3,0 | 3,0 | 3,0 | |
| **Pigment** | | | | | | |
| V (Gew.-%) | 0,45 | 0,42 | 0,43 | 0,41 | nicht bestimmt | |
| P (Gew.-%) | 0,26 | 0,33 | 0,31 | 0,38 | nicht bestimmt | |
| **CIELAB-Farbwerte** Einfärbung in einer Transparentglasur | 5 %ige Einfärbung | dto. | dto. | dto. | 10 %ige Einfärbung (i) | (ii) |
| L* | 47,96 | 52,35 | 52,06 | 57,00 | 45,54 | 45,72 |
| a* | + 9,52 | + 12,40 | + 13,11 | + 11,66 | +19,10 | 19,65 |
| b* | - 21,75 | - 16,47 | - 15,97 | - 9,97 | -25,92 | 24,97 |

Anmerkung: Beispiel 5 wurde zweimal durchgeführt (5i und 5ii), wobei unterschiedliche Lieferchargen des gleichen Zirkoniumdioxids eingesetzt wurden.

**Patentansprüche**

1.  Violette Zirkon-Vanadium-Pigmente, deren Zirkon-Wirtsgitter außer mit Vanadium mit Phosphor dotiert ist,
    dadurch gekennzeichnet,

daß sie in 5 gew.-%iger Einfärbung in einer Transparentglasur die Farbwerte (CIE-Lab-Farbsystem nach DIN 5033, Teil 3) L* gleich oder kleiner 58, a* gleich oder größer +9 und b* kleiner -10 aufweisen.

2. Violette Zirkon-Vanadium-Pigmente nach Anspruch 1,
dadurch gekennzeichnet,
daß im Zirkon-Wirtsgitter 0,2 bis 0,4 Gew.-% Phosphor und 0,4 bis 0,5 Gew.-% Vanadium eingebaut sind und die Pigmente Farbwerte im Bereich von L* gleich oder kleiner 53, a* = +10 bis +15 und b* = -15 bis -32 aufweisen.

3. Verfahren zur Herstellung violetter Zirkon-Vanadium-Pigmente der Ansprüche 1 oder 2,
dadurch gekennzeichnet,
daß ein Pulvergemisch, das frei ist von thermisch gespaltenem Zirkoniumsilikat und im wesentlichen aus pulverförmigem Zirkoniumdioxid, einer Quelle für Siliziumdioxid aus der Reihe natürlicher oder synthetischer Kieselsäuren und Zeolithe, mindestens einer Vanadiumverbindung aus der Reihe der Vanadiumoxide und Vanadate, mindestens einer während des Verfahrens in ein Phosphat überführbaren anorganischen oder organischen Phosphorverbindung und mindestens einem Fluorid- und mindestens einem Chlorid-Mineralisator besteht, wobei im Pulvergemisch das Atomverhältnis Zirkonium zu Silizium zu Vanadium zu Phosphor im Bereich von 1 zu (0,95-1,10) zu (0,05-0,20) zu (0,008-0,028) beträgt und die Mineralisatoren in einer Menge von 1 bis 15 Gew.-%, bezogen auf das Pulvergemisch, bei einem Fluorid- zu Chlorid-Atomverhältnis im Bereich von 4 zu 1 bis 1 zu 2 anwesend sind, mittels einer Mahlung in einer Intensivmühle homogenisiert und dann 1 bis 5 Stunden bei 700 °C bis 900 °C geglüht wird.

4. Verfahren nach Anspruch 3,
dadurch gekennzeichnet,
daß Natriumfluorid und Natriumchlorid als Mineralisatoren eingesetzt werden und das Fluorid- zu Chlorid-Atomverhältnis der Mineralisatoren im Bereich 3 zu 1 bis 1 zu 1 liegt.

5. Verfahren nach Anspruch 3 oder 4,
dadurch gekennzeichnet,
daß die Mineralisatoren in einer Menge von 4 bis 8 Gew.-%, bezogen auf das Pulvergemisch, eingesetzt werden.

6. Verfahren nach einem oder mehreren der Ansprüche 3 bis 5,
dadurch gekennzeichnet,
daß ein Zirkoniumdioxid mit einem mittleren Teilchendurchmesser ($d_{50}$-Wert) im Bereich von 2 bis 9 $\mu$m eingesetzt wird.

7. Verfahren nach einem oder mehreren der Ansprüche 3 bis 6,
dadurch gekennzeichnet,
daß als Phosphorverbindung ein Alkaliphosphat, insbesondere Natriumphosphat, eingesetzt wird.

8. Verfahren nach einem oder mehreren der Ansprüche 3 bis 7,
dadurch gekennzeichnet,
daß eine flüssige und/oder in eine wäßrige Lösung überführte Phosphorverbindung, vorzugsweise eine Phosphorsäure oder ein Alkalisalz derselben oder eine Phosphonsäure oder Alkalisalz derselben, bei der Herstellung des Pulvergemischs eingesetzt wird.

9. Verfahren nach einem oder mehreren der Ansprüche 3 bis 8,
dadurch gekennzeichnet,
daß die Mahlung in einer Kugel- oder Schwingmühle bei einer Laufzeit von vorzugsweise 30 bis 60 Minuten erfolgt.

10. Verwendung violetter Zirkon-Vanadium-Pigmente der Ansprüche 1 oder 2 zum Einfärben von Glasuren und Emails für Glas, Porzellan, Keramik und Metalle.

**Europäisches Patentamt**

**EUROPÄISCHER RECHERCHENBERICHT**

Nummer der Anmeldung

EP 94 10 3239

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,A<br><br>D | US-A-5 252 126 (SPEER ET AL)<br>* Ansprüche 1,3 *<br>& DE-A-42 16 174<br>--- | 1,3 | C01B33/20<br>C09C1/00 |
| A | US-A-3 573 080 (BELL ET AL)<br>* Anspruch 1 *-<br>--- | 1 | |
| A,D | US-A-2 441 447 (SEABRIGHT)<br>* Anspruch 1 *<br>--- | 1 | |
| A | US-A-3 058 838 (OLBY)<br>* Ansprüche 1,8 *<br>--- | 1,3 | |
| D,A | GB-A-1 447 276 (KEELING & WALKER LIMITED)<br>* Ansprüche 1,7 *<br>----- | 1,3 | |
| | | | **RECHERCHIERTE SACHGEBIETE (Int.Cl.5)**<br><br>C01B<br>C09C |

Der vorliegende Recherchenbericht wurde für alle Patentansprüche erstellt

| Recherchenort | Abschlußdatum der Recherche | Prüfer |
|---|---|---|
| BERLIN | 31. Mai 1994 | Clement, J-P |